(19)

**Europäisches Patentamt**
**European Patent Office**
**Office européen des brevets**

(11)  **EP 4 492 296 B1**

(12)  **EUROPEAN PATENT SPECIFICATION**

(45) Date of publication and mention
of the grant of the patent:
**27.05.2026  Bulletin 2026/22**

(21) Application number: **23306224.9**

(22) Date of filing: **13.07.2023**

(51) International Patent Classification (IPC):
**G06N 10/70** (2022.01)    **G06N 10/40** (2022.01)

(52) Cooperative Patent Classification (CPC):
**G06N 10/40; G06N 10/70**

(54) **METHOD FOR CALIBRATING A QUANTUM SYSTEM FOR STABILIZING A CAT QUBIT**

VERFAHREN ZUR KALIBRIERUNG EINES QUANTENSYSTEMS ZUR STABILISIERUNG EINES KATZEN-QUBIT

PROCÉDÉ D'ÉTALONNAGE D'UN SYSTÈME QUANTIQUE POUR STABILISER UN BIT QUANTIQUE DE CHAT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**15.01.2025  Bulletin 2025/03**

(73) Proprietor: **Alice & Bob**
**75015 Paris (FR)**

(72) Inventors:
• **REGLADE, Ulysse**
**75015 Paris (FR)**
• **BOCQUET, Adrien**
**75015 Paris (FR)**
• **JEZOUIN, Sébastien**
**75015 Paris (FR)**
• **MURANI, Anil**
**75015 Paris (FR)**

(74) Representative: **Atout PI Laplace**
**Immeuble Up On**
**25 Boulevard Romain Rolland**
**CS 40072**
**75685 Paris Cedex 14 (FR)**

(56) References cited:
**EP-A1- 4 207 005**

• **LESCANNE RAPHAëL ET AL: "Exponential suppression of bit-flips in a qubit encoded in an oscillator", NATURE PHYSICS, vol. 16, no. 5, 30 July 2019 (2019-07-30), GB, pages 509 - 513, XP093067463, ISSN: 1745-2473, Retrieved from the Internet <URL:https://arxiv.org/pdf/1907.11729.pdf> [retrieved on 20231130], DOI: 10.1038/s41567-020-0824-x**
• **ULYSSE R\'EGLADE ET AL: "Quantum control of a cat-qubit with bit-flip times exceeding ten seconds", ARXIV.ORG, CORNELL UNIVERSITY LIBRARY, 201 OLIN LIBRARY CORNELL UNIVERSITY ITHACA, NY 14853, 13 July 2023 (2023-07-13), XP091562280**

**EP 4 492 296 B1**

**Description**

The invention concerns a method for calibrating a quantum system for stabilizing a cat qubit.

It is known from the state of the art that it is possible to stabilize cat qubits, i.e. bosonic qubits defined by a quantum manifold spanned by the superpositions of two coherent states, which are quasi-classical states of the bosonic mode. To this end, a specific dissipative stabilization mechanism is needed and consists in engineering a non-linear conversion between two photons of a first mode - also known as memory mode or cat qubit mode - that hosts the stabilized quantum manifold and one photon of a second mode - also known as buffer mode - that is strongly dissipative. This process is activated by bringing the system close to 2-to-1 photon conversion resonance thanks to a parametric pump or a DC bias.

The possibility of realizing such a qubit has been demonstrated by R. Lescanne et al. in "Exponential suppression of bit-flips in a qubit encoded in an oscillator" (Nature Physics, 2020). As above-mentioned, cat qubits stabilization relies on a mechanism that dissipates photons in pairs. This process pins down two coherent states to separate locations in phase space. By increasing this separation, an exponential decrease of the bit-flip rate was observed experimentally while only linearly increasing the phase-flip rate. As a result, stabilized cat qubits were demonstrated to benefit from a high noise bias, which means that the bit-flip probability is exponentially smaller than the phase-flip probability.

For the purpose of determining the state of the cat qubit, a transmon qubit (or transmon) is commonly used as measurement apparatus coupled to the cat qubit mode. For instance, Lescanne *et al.* (2020) proposed to parametrically pump an asymmetrically threaded superconducting quantum interference device - hereinafter ATS - to engineer the 2-to-1 photon conversion associated with a transmon for measuring the cat qubit state.

At first, one would thus think that, once the design of cat qubit circuit is chosen, the frequency needed to drive the buffer mode and the parametric pump or DC bias should be known. However, due to the finite precision of the circuit simulation and fabrication, these parameters need to be calibrated in situ once the circuit is in its final cold environment.

Conventionally, this calibration is performed by a tedious process involving the use of a transmon for reading the memory mode. More precisely, the process involves implementing various operating points for the cat qubit (that is driving, the buffer and the parametric pump or the DC bias), and using the transmon to perform a Wigner tomography of the state of the memory mode in order to detect whether it is a cat qubit state and whether it is proper.

Not only is this process tedious as Wigner tomography takes quite a long time, but it has also been demonstrated that transmons have a detrimental effect on cat qubits. Indeed, as pointed out in this Lescanne *et al.* (2020), the presence of the transmon results in a bit-flip time saturating to a few milliseconds. The Applicant's work revealed that this is due to the quantum manifold stabilization rate being too small to resist to dispersive frequency shifts induced by thermal excitations of the transmon. Indeed, a transmon has spurious cross-Kerr terms which induce additional noise processes with escape rates out of the quantum manifold given by the large transmon-cat qubit dispersive shift.

Moreover, the issues of the transmon had already been observed in the very first implementations of the above-described stabilization scheme - Z. Leghtas et al. (2015) in the article "Confining the state of light to a quantum manifold by engineered two-photon loss" (Science, Vol. 347, No. 6224) and S. Touzard et al. (2018) in the article "Coherent Oscillations inside a Quantum Manifold Stabilized by Dissipation" (Physical Review X 8, 023005) - in which the superconducting circuit element used as a four-wave mixer was a transmon with a single Josephson junction and that could not observe any exponential bit-flip suppression.

There is therefore a need to provide a method to calibrate a system for stabilizing a cat qubit which does not require the use of a transmon. On top of this, there is a need for a faster calibration method as part of the bring-up sequence of a superconducting processor comprising hundreds of cat qubit systems.

The invention aims at improving the situation. To this end, the Applicant proposes a method for calibrating a quantum system for stabilizing a cat qubit, said quantum system including a non-linear superconducting quantum circuit having a first mode with a first resonant frequency for hosting said cat qubit and a second mode with a second resonant frequency and comprising a non-linear element arranged to induce a 2-to-1 photon exchange between said first mode and said second mode either via a parametric pump and 4-wave mixing coupling said first mode and said second mode or via a DC bias and 3-wave mixing coupling said first mode and said second mode, and a command circuit for: (i) delivering microwave radiation to the non-linear superconducting quantum circuit in order to provide said parametric pump or current bias to the non-linear superconducting quantum circuit in order to provide said DC bias, and (ii) delivering microwave radiation to the non-linear superconducting quantum circuit in order to provide a drive of said first mode, comprising the following operations:

a) obtaining a set of command circuit operating parameters, each set consisting of either a couple associating a frequency of said parametric pump and a frequency of said first mode drive if said non-linear element performs a 4-wave mixing or a couple associating a value of said DC bias and a frequency of said first mode drive if said non-linear element performs a 3-wave mixing,

b) applying said set of command circuit operating parameters to said command circuit during a period of more than 10 ns,

c) performing at least one measurement in the group comprising a first mode photon number measurement and a second mode electromagnetic field measurement,

d) repeating operations a) to c) until a calibration condition has been met,

e) deriving a calibrated set of command circuit operating parameters based on the measurements obtained in operation c).

This method is advantageous because it can be performed without involving the use of a transmon. Furthermore, depending on the measurement performed, significant time gains can be achieved by foregoing Wigner based measurements.

In various embodiments, the method may present one or more of the following features:

- the repetition of operation a) in operation d) includes performing a two-dimensional sweep of operating values for said parametric pump frequency and said first mode drive frequency or for said DC bias value and said first mode drive frequency,

- the calibration condition of operation d) is met when the two-dimensional sweep has been performed,

- operation e) comprises determining a saddle point in the measurements of operation c),

- operation a) in operation d) includes performing a saddle point search algorithm on said parametric pump frequency and said first mode drive frequency or on said DC bias value and said first mode drive frequency based on the measurements of operation c),

- the calibration condition of operation d) is met when the saddle point search algorithm converges beyond a chosen threshold,

- operation e) comprises returning the set of command circuit operating parameters of the last repetition of step a),

- operation b) and operation c) overlap, and

operation c) comprises acquiring the signal coming out of said second mode (b).

The Applicant also proposes a quantum system for stabilizing a cat qubit, said quantum system including a non-linear superconducting quantum circuit having a first mode with a first resonant frequency $\omega_a$ for hosting said cat qubit and a second mode with a second resonant frequency $\omega_b$ and comprising a non-linear element arranged to induce a 2-to-1 photon exchange between said first mode and said second mode either via a parametric pump and 4-wave mixing coupling said first mode and said second mode or via a DC bias and 3-wave mixing coupling said first mode and said second mode, and a command circuit for: (i) delivering microwave radiation or current bias to the non-linear superconducting quantum circuit in order to provide said parametric pump or current bias to the non-linear superconducting quantum circuit in order to provide said DC bias, and (ii) delivering microwave radiation to the non-linear superconducting quantum circuit in order to provide a drive of said first mode, wherein said command circuit is configured to perform the above method for calibrating a quantum system for stabilizing a cat qubit or any one of its embodiments.

Other features and advantages of the invention will readily appear in the following description of the drawings, which show exemplary embodiments of the invention and on which:

- Figure 1 schematically illustrates a quantum system arranged to measure an observable of a cat qubit according to the invention,

- Figure 2 illustrates an embodiment of the quantum system of figure 1 in which a cat qubit is stabilized using a parametric dissipative stabilization,

- Figure 3 illustrates a partial electrical equivalent diagram of an example implementation of a non-linear superconducting quantum circuit of the quantum system of figure 2, with only an ATS and two resonant portions shown,

- Figure 4 illustrates a partial electrical equivalent diagram of another example implementation of a non-linear superconducting quantum circuit of the quantum system of figure 2, with only an ATS and two resonant portions shown,

- Figure 5 partially illustrates an example implementation of the quantum system of figure 2, with part of the external environment shown,

- Figure 6 partially illustrates another embodiment of the quantum system of figure 1 in which a cat qubit is stabilized using a resonant dissipative stabilization,

- Figure 7 partially illustrates an example implementation of the quantum system of figure 6,

- Figure 8 illustrates the memory and buffer state evolution in standard calibration using a buffer drive

- Figure 9 illustrates the memory and buffer state evolution with the new calibration method proposed here using a memory drive

- Figure 10 illustrates a general diagram of a method for calibrating a quantum system for stabilizing a cat qubit

- Figure 11 is a 2D color map representing simulated measurement (memory average photon number and magnitude of buffer electromagnetic field) values in the steady state to illustrate the working point condition,

- Figure 12 is a 2D color map similar to figure 11 corresponding to experimental results exemplifying the method for calibrating a quantum system or stabilizing a cat qubit, and

- Figure 13 shows a Wigner measurement of a cat qubit calibrated with the saddle point determined on figure 12.

### A. Cat qubits

The quantum system 1 is arranged to stabilize a cat qubit.

So far, the Applicant's work has been generally concerned with the stabilization of cat qubits. As previously explained, R. Lescanne et *al.* (2020) demonstrated that such cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle) \text{ with } N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states.

It is generally considered that the use of a single repetition code is sufficient to correct the remaining errors as bit-flip errors are sufficiently rare; and, more particularly, a phase-flip error correction code is sufficient to correct the remaining phase-flip. This can be for instance a repetition code defined in the dual base or any other state-of-the-art error correction code.

B. Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction or an ATS - to the cat qubit mode and by engineering the Hamiltonian

$$H/\hbar = g_2(a^2 - \alpha^2)b^\dagger + \text{h.c.}$$ , where b is the photon annihilation operator of the buffer mode b and $g_2$ is the two-photon coupling rate, by applying to the four-wave mixing device a pump at frequency $|2f_a - f_b|$ and a drive of the buffer mode at frequency $f_b$ provided $g_2 < \kappa_b$.

b) a Kerr Hamiltonian $$H/\hbar = \frac{K}{2}(a^{\dagger 2} - \alpha^2)\left(a^2 - \overline{\alpha^2}\right)$$, where $K$ is the amplitude of the Kerr Hamiltonian, $a$ is the photon annihilation operator, and $|\alpha|^2$ is the mean photon number.

c) a detuned Kerr Hamiltonian $$H/\hbar = \frac{K}{2}(a^{\dagger 2} - \alpha^2)\left(a^2 - \overline{\alpha^2}\right) - \Delta a^\dagger a$$, where $K$ is the amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $$H/\hbar = g_2(a^2 - \alpha^2)\sigma_+ + \text{h.c.}$$, where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $$L_{SC} = \sqrt{\kappa_{SC}}\left((\cosh(r)a + \sinh(r)e^{i\theta}a^\dagger)^2 - \alpha^2\right)$$, where $\kappa_{SC}$ is the squeezed two-photon dissipation rate, $a$ is the photon annihilation operator, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS - to the cat qubit mode and by engineering the Hamiltonian

$$H/\hbar = g_{SC}\left((\cosh(r)a + \sinh(r)e^{i\theta}a^\dagger)^2 - \alpha^2\right)b^\dagger + \text{h.c.}$$, where b is the photon annihilation operator of mode b and $g_{SC}$ is the squeezed two-photon coupling rate, with several pumps at frequencies $2f_a - f_b$, $f_b$ and $2f_a + f_b$, and a drive of the buffer mode at frequency $f_b$ provided $g_{SC} < \kappa_b$.

f) a resonant dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $$H/\hbar = g_2(a^2 - \alpha^2)b^\dagger + \text{h.c.}$$, where b is the photon annihilation operator of the buffer mode b provided the mode frequencies verify substantially $2f_a = f_b$ and $g_2 < \kappa_b$ to which a drive of the buffer mode at frequency $f_b$ is added.

In the context of the present invention, the quantum system 1 is arranged to implement a parametric dissipative stabilization according to scheme a) or a resonant dissipative stabilization according to scheme f). In both cases, the cat qubit is stabilized through the engineering of a jump operator - or dissipator - $L_2^\alpha$ expressed as

$$L_2^\alpha = \sqrt{\kappa_2}(a^2 - \alpha^2)$$. As will appear below, the invention may also be used in performing part of the tuning of a quantum system arranged to implement a dissipative squeezing stabilization according to scheme e) or to its variant called "moon cat qubit" in European patent application EP23175147.

The parametric dissipative stabilization relies on generating the following terms:

- $a^2$: this first term corresponds to the non-linear conversion between two photons of a first mode a - the memory - and one photon of a second mode b - the buffer. This term requires a pump at a frequency $|2f_a - f_b|$, where $f_a$ is the resonant frequency of the first mode a and $f_b$ is the resonant frequency of the second mode b. Such a pump is thus a two-photon pump.
- $\alpha^2$: this second term requires the drive of the second mode b at a frequency $f_b$. Such a drive is thus a two-photon drive.

The resonant dissipative stabilization corresponds to the particular case where $2f_a = f_b$. Therefore where the 2-to-1 photon conversion is not activated by parametric pumping but by a DC bias that tune the mode frequencies to the frequency matching condition. Consequently, besides the precise tuning enabled by the DC bias, the only microwave drive necessary to engineer the jump operator $L_2^\alpha$ is the drive of the second mode b at a frequency $f_d$ close to its resonant frequency $f_b$.

Despite not being sufficient to fully tune scheme e), this calibration method could be the first step of its calibration set.

C. Quantum systems for stabilizing cat qubits

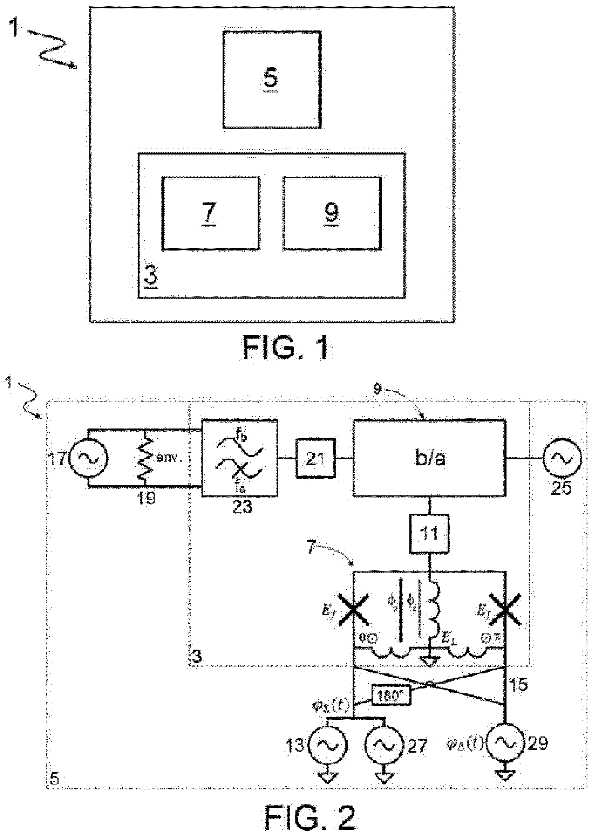

As illustrated in figure 1, the quantum system 1 comprises a non-linear superconducting quantum circuit 3 and a command circuit 5.

The non-linear superconducting quantum circuit 3 is arranged to make possible three-wave mixing or four-wave mixing between a first mode a and a second mode b. In the following, the first mode a is used as a memory hosting a cat qubit, while the second mode b is used as a buffer in between the cat qubit and the external environment.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$, where $\omega_a$ and $\omega_b$ are the respective angular frequencies of the first mode a and the second mode b.

By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components.

The non-linear superconducting quantum circuit 3 is intended to be subject to microwave radiations delivered by the command circuit 5 in order to engineer various non-linear interactions between the first mode a and the second mode b. The frequency of each microwave radiation is tuned to select specific terms within the rotating wave approximation.

The non-linear superconducting quantum circuit 3 comprises a non-linear element 7 and at least one resonant portion 9.

The non-linear element 7 is arranged to engineer the jump operator $L_2^\alpha$ for stabilizing the cat qubit. As previously explained, such a stabilization can be a parametric dissipative stabilization or a resonant dissipative stabilization.

In the case in which a parametric dissipative stabilization is implemented, the non-linear element 7 is a four-wave mixing non-linear element.

The four-wave mixing non-linear element is for instance an ATS. It is known to the skilled person that an ATS can be used to engineer the 2-to-1 photon conversion, i.e. the first term $a^2$ of the jump operator $L_2^\alpha$, in order to perform a parametric dissipative stabilization, as successfully shown by R. Lescanne *et al.* (2020). More particularly, such a 2-to-1 photon conversion between the first mode a and the second mode b is obtained by parametrically pumping the ATS at the frequency $f_p = |2f_a - f_b|$. Advantageously, the pump frequency satisfies $f_p \gg g_2$ to make this parametric pumping work as well as possible.

Contrary to the first implementations of this stabilization scheme proposed by Z. Leghtas *et al.* (2015) and S. Touzard *et al.* (2018) in which the superconducting circuit element used as a four-wave mixer was a transmon with a single Josephson junction, the solution developed by R. Lescanne *et al.* (2020) exploits the ATS design which has much lower cross-Kerr terms than the transmon and thus allowed to observe the exponential suppression of bit-flips.

Typically, the ATS has flux lines through which radiation can be delivered to modulate a common flux and/or a differential flux.

In the case in which a resonant dissipative stabilization is implemented, the non-linear element 7 is a three-wave mixing non-linear element.

As above-mentioned, the resonant case corresponds to the particular situation where $2f_a = f_b$ ($f_p = 0$) and may be particularly advantageous, as developed in the European patent application EP 21306965.1 filed by the Applicant. In such a resonant case, the 2-to-1 photon conversion is not activated by parametrically pumping a four-wave mixing non-linear element: a three-wave mixing non-linear element should be used instead, together with a DC bias that brings the system to the 2-to-1 photon resonance.

However, as detailed below, the measurement of the observable of the cat qubit may involve engineering a Hamiltonian that requires four-wave mixing. Typically, a longitudinal coupling between the first mode a and the second mode b can be used to carry out the measurement of an observable of the cat qubit. Yet, the longitudinal term $a^\dagger a b^\dagger$ of the corresponding Hamiltonian still requires four-wave mixing to be engineered. Hence, the resonant situation may require both a three-wave mixing non-linear element for stabilizing the cat qubit and a four-wave mixing non-linear element for measuring an observable of the cat qubit. The three-wave mixing can arise by operating the ATS at a different flux working point than the $0 - \pi$ flux working point it is usually operated at or by adding another non-linear element as described in the above-mentioned European patent application EP 21306965.1.

The resonant portion 9 is arranged to be connected to the non-linear element 7 to provide the non-linear superconducting quantum circuit 3 with the first mode a and the second mode b having respective resonant frequencies $f_a$ and $f_b$. More particularly, the first mode a and the second mode b "participate" in the non-linear element 7, which means that a portion or the entirety of the mode magnetic energy is stored in the non-linear element 7. Such a participation can be quantified by the zero-point fluctuation of the superconducting phase across the ATS, noted $\varphi_a$ for the first mode a and $\varphi_b$ for the second mode b.

In the schematic diagram of the quantum system 1 illustrated in figure 1, the non-linear superconducting quantum system 3 comprises only one resonant portion, i.e. the resonant portion 9. However, it should be understood here that the non-linear superconducting quantum system 3 comprises at least one resonant portion, and typically two or more resonant portions to form two electromagnetic modes, a cat qubit mode and a buffer mode.

The command circuit 5 is arranged to deliver microwave radiations.

In the context of the quantum system 1, the command circuit 5 is arranged at least to drive the second mode b by delivering radiation at a frequency equal to the second resonant frequency $f_b$ to the resonant portion 9 since both the parametric dissipative stabilization and the resonant dissipative stabilization require such a drive of the second mode b.

C.1. Parametric dissipative stabilization quantum systems

Figure 2 shows a detailed architecture of the quantum system 1 for implementing a parametric dissipative stabilization.

Consequently, the non-linear element 7 is a four-wave mixing non-linear element, and more exactly an ATS to which the resonant portion 9, which is a linear microwave network b/a, is connected.

It is known to the skilled person that, when biased at its flux working point ($0 - \pi$ or conversely), the Hamiltonian of the ATS 7 has the following "sin-sin" form:

$$H_{ATS} = -2E_J \sin\big(\varphi_\Sigma(t)\big) \sin(\varphi) + \frac{E_L}{2}\big(\varphi - \varphi_\Delta(t)\big)^2$$

where $\varphi = \varphi_a(a + a^\dagger) + \varphi_b(b + b^\dagger)$ is the total superconducting phase difference across the ATS 7, $\varphi_a$ is the zero-point fluctuation of the phase of the first mode a across the ATS 7 and $\varphi_b$ is the zero-point fluctuation of the phase of the second mode b across the ATS 7, $E_J$ is the Josephson energy of the side junctions and $E_L$ is the inductive energy of a central inductance, $\varphi_\Sigma(t)$ corresponds to a common flux modulation of the two loops of the ATS 7 and $\varphi_\Delta(t)$ corresponds to a differential flux modulation of the two loops of the ATS 7. The former can be implemented by delivering microwave radiations through flux lines of the ATS 7 out of phase, the latter can be implemented by delivering microwave radiations through the two flux lines of the ATS 7 in phase.

Parametric pumping of the ATS 7 is typically done by pumping the common flux as pumping the differential flux merely displaces the modes coupled to the ATS 7. As an example, by pumping the common flux at the frequency $f_p = |2f_a - f_b|$, $\varphi_\Sigma(t) = \varepsilon_{2ph}\cos(2\pi f_p t)$, the non-linear resonant part of the Hamiltonian writes in the rotating frame:

$$H_{ATS} = \frac{E_J \epsilon_{2ph} \varphi_a^2 \varphi_b}{2}\big(a^2 b^\dagger + \text{h.c.}\big)$$

which is typically the two-to-one photon exchange Hamiltonian needed to engineer the two-photon stabilization.

Referring again to figure 2, the linear microwave network b/a is such that, when coupled via a linear coupler 11 to the ATS 7 which acts as an inductive element, the non-linear superconducting quantum circuit 3 has the first mode a and the second mode b at respective resonant frequencies $f_a$ and $f_b$ which participate in the ATS 7.

When an external DC magnetic field is set such that a 0 mod $2\pi$ magnetic flux threads one of the loop and a $\pi$ mod $2\pi$ flux threads the other loop, it is ensured that the ATS Hamiltonian has its "sin-sin" form. For clarity, the set-up applying the external DC magnetic field is not drawn on figure 2 but can be applied via the two bottom mutual inductances of the ATS 7. A typical implementation consists in interleaving a bias-tee connected to a DC current source to input DC current into the system while letting the microwave radiations go through.

A microwave source 13 is set-up to modulate the common flux in the ATS 7.

For this purpose, a microwave network 15 is used to split the radiation emitted by the microwave source 13 and apply it to each node of the ATS 7 with the correct phase. Alternatively, two different microwave sources could be used, each being simply coupled to a single node of the ATS 7 and their relative phase and amplitude being set so as to achieve the desired flux modulation.

When the microwave source 13 is set at the frequency $|2f_a - f_b|$, the non-linear superconducting quantum circuit 3 performs the 2-to-1 photon conversion between the first mode a and the second mode b. To convert this 2-to-1 photon conversion into two-photon dissipation, the second mode b is selectively coupled to a load 19 via a linear coupler 21 and a microwave filter 23 configured as a band pass filter with a frequency $f_b$.

Alternatively, the microwave filter 23 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 19.

Alternatively, it may be configured as a low-pass (respectively high-pass) filter if $f_a > f_b$ (resp $f_b > f_a$). In other embodiments, the microwave filter 23 can be omitted when coupling between the load 19 and substantially only the second mode b can be established. The skilled person thus understands that the first mode a has a high-quality factor while the second mode b has a low-quality factor.

As previously explained, the second mode b is driven at its resonant frequency $f_b$. This two-photon drive is performed by a microwave source 17 set at frequency $f_b$.

In the above, the load 19 can be seen as part of the command circuit 5 of figure 2, while the linear coupler 21 and the microwave filter 23 can be seen as part of the non-linear superconducting quantum circuit 3.

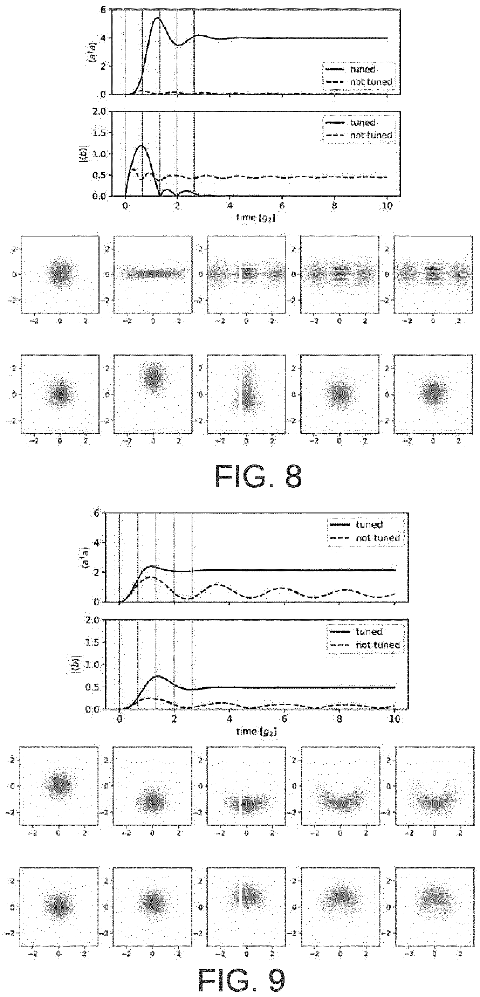

In addition to stabilizing the cat qubit, the command circuit 5 also makes it possible to measure an observable of the latter. As detailed below, especially with reference to figure 9 and following, the measurement method which is the subject matter of the present invention includes the mapping of the observable to be measured to the Pauli operator Z as well as the measurement of the latter. To this end, and as shown in figure 2, the command circuit 5 further comprises a microwave source 25, a microwave source 27 and a microwave source 29.

The microwave source 25 is arranged to drive the first mode a by delivering microwave radiation at the frequency $f_a$ to the linear microwave network b/a. Such a drive of the first mode a causes the non-linear superconducting quantum circuit 3 to engineer a Hamiltonian $H_Z$ expressed as $H_Z/\hbar = \epsilon_z a + \mathrm{h.c.}$, where the complex rate $\epsilon_z$ results from the amplitude and phase of the drive of the first mode a.

The microwave source 27 is set-up, in addition to the microwave source 13, to modulate the common flux in the ATS 7. As detailed below, such a microwave source 27 can be involved in the measurement as such. The microwave source 27 is arranged to deliver microwave radiation for causing the non-linear superconducting quantum circuit 3 to engineer a Hamiltonian. For instance, such a Hamiltonian yields through longitudinal coupling between the first mode a and the second mode b.

Finally, the microwave source 29 is set-up to modulate the differential flux in the ATS 7 through the microwave network 15. The microwave source 29 can be used to reduce spurious Hamiltonian terms induced by the microwave source 27. It is to be noted that the microwave network 15 is used for convenience but can be omitted and the microwave source 29 and the microwave source 27 could be applied directly to both nodes of the ATS 7, their relative phase and amplitude being set so as to achieve the desired flux modulation.

For the sake of completeness, it may also be noted that the microwave source 29 can be used, instead of the microwave source 17, to deliver microwave radiation at a frequency $f_b$ to the linear microwave network b/a to drive the second mode b.

C.1.1. Galvanic cat qubits

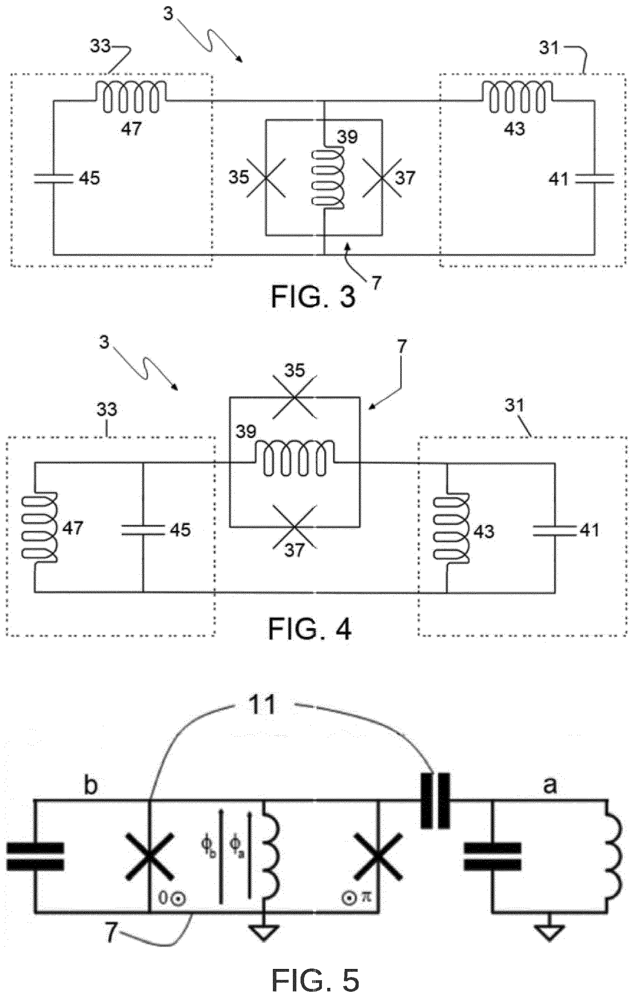

Figures 3 and 4 illustrate electrical equivalent diagrams of respective embodiments of the non-linear superconducting quantum circuit 3 which takes the form of a galvanic circuit. Such electrical equivalent diagrams are partial since they both only represent the ATS 7 and the linear microwave network b/a, and thus represent neither the linear coupler 21 nor the microwave filter 23. More particularly, the linear microwave network b/a includes a first resonant portion 31 and a second resonant portion 33.

The ATS 7 is realized as known in the art, for example in R. Lescanne *et al.* (2020). The ATS 7 includes a first Josephson junction 35 and a second Josephson junction 37 in parallel, and an inductive element 39 in parallel between them. As a result, the ATS 7 has two connected loops, each loop comprising a Josephson junction in parallel with the shunt inductive element. The inductive element 39 can be realized either geometrically or with a chain of junctions. The ATS 7 has both of its loops flux biased in DC and AC. The DC bias sets the flux working point of the ATS 7. It may be operated near the so-called saddle point, which is a sweet spot in frequency and has small cross-Kerr terms.

Both the first resonant portion 31 and the second resonant portion 33 are galvanically coupled to the ATS 7. The first resonant portion 31 confers the first mode a having the resonant frequency $f_a$ to the non-linear superconducting quantum circuit 3, while the second resonant portion 33 confers the second mode b having the resonant frequency $f_b$ to the non-linear superconducting quantum circuit 3.

By "galvanically coupled", it should be understood here that there are short electrically conducting portions which connect the first resonant portion 31 and the second resonant portion 33 to the ATS 7, i.e., a short electrically conducting track or any other mean ensuring a physically continuous conducting junction. The expression "short" means that the electrically conducting track has an impedance which is negligeable compared to the impedance of the ATS 7, the first resonant portion 31 and the second resonant portion 33 at the resonant frequencies $f_a$ and $f_b$. These short electrically conducting portions correspond to the linear coupler 11 of figure 2.

In the embodiment of figure 3, the first resonant portion 31 includes a capacitive element 41 and an inductive element 43 which are connected in series. Similarly, the second resonant portion 33 includes a capacitive element 45 and an inductive element 47 which are connected in series.

In the embodiment of figure 4, the first resonant portion 31 also includes the capacitive element 41 and the inductive element 43. However, in such embodiment, the capacitive element 41 and the inductive element 43 are connected in parallel. Similarly, the capacitive element 45 and the inductive element 47 of the second resonant portion 33 are connected in parallel.

In the respective embodiments of figures 3 and 4, the microwave linear network b/a includes two resonant portions. However, as previously explained, the microwave linear network b/a may comprise only one resonant portion which is arranged to produce both the first mode a and the second mode b.

C.1.2. Capacitive cat qubits

Figures 5 illustrates a possible exemplary implementation of the quantum system 1 of figure 2. Contrary to figure 3 and figure 4, the external environment is represented. The ATS 7 serves as a central reference point to which the rest of the components are connected. The filtering and external environment of the second mode b are also present to this end. The microwave sources have been omitted for simplicity but are arranged in the same way as in figure 2 to run the circuit.

In figure 5, the linear microwave network b/a is formed by a capacitor galvanically coupled to the ATS 7 to form the second mode b, and a parallel LC resonator strongly capacitively coupled to the ATS 7 to form the first mode a. The couplings to the ATS 7 form the linear coupler 11. The buffer is coupled to the external environment by a capacitance 19.

Figures 2 to 5 discussed above show an embodiment of the quantum system 1 in which the non-linear element 7 is an ATS and in which the cat qubit is stabilized using parametric dissipative stabilization.

C.2. Resonant dissipative stabilization quantum systems

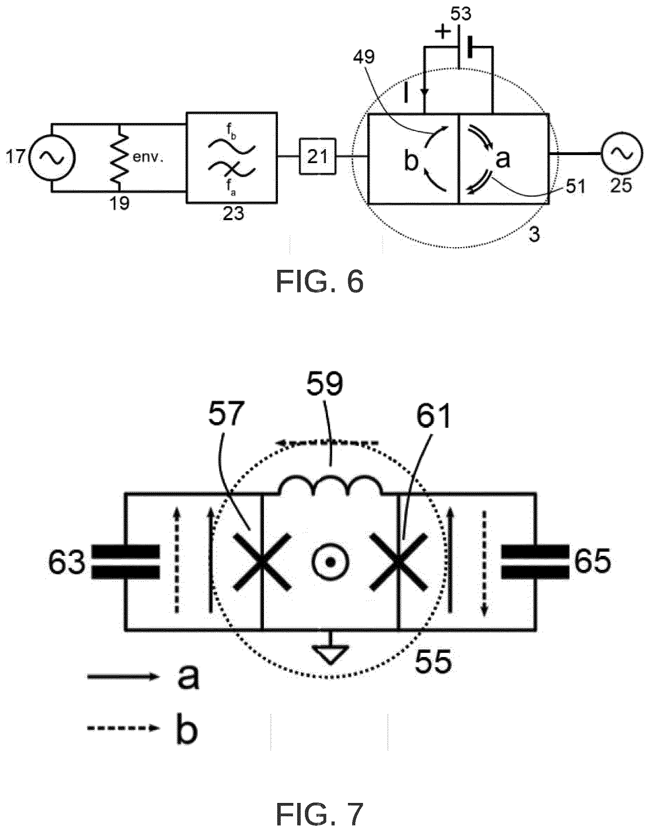

However, as previously explained, the method of measuring an observable of a cat qubit according to the present invention can also be implemented with a three-wave mixing non-linear element as a non-linear element 7 and by stabilizing the cat qubit with a resonant dissipative stabilization. Figures 6 and 7 both relate to such an embodiment.

Figure 6 partially illustrates the quantum system 1. In this figure, the three-wave mixing non-linear element 7 and the at least one resonant portion 9 are brought together to form the non-linear superconducting quantum circuit 3. As previously explained, such a non-linear superconducting quantum circuit 3 is arranged to perform intrinsically the 2-to-1 photon conversion - symbolized here by a back-and-forth single arrow 49 and double arrows 51 - between the first mode a and the second mode b.

A current source 53 is connected via wires to the non-linear superconducting quantum circuit 3. Such a current source 53 can be considered as part of the command circuit 5.

The current source 53 is directly connected to the non-linear superconducting quantum circuit 3 so that current applied by the current source 53 flows through at least a subset of components of the non-linear superconducting quantum circuit 3. The current source 53 is configured to both allow three-wave mixing interaction and to tune the frequency matching condition $2f_a = f_b$.

Similarly to figure 2, the second mode b is coupled to a load 19 via a linear coupler 21, and such a coupling cause the second mode b to be dissipative. The microwave source 17 is arranged to deliver microwave radiation at a frequency equal to $f_b$ to the resonant portion 9 to drive the second mode b. As a reminder, the two-photon drive is needed for both the parametric dissipative stabilization and the resonant dissipative stabilization.

Here too, a microwave filter 23 configured as a band pass filter with a frequency $f_b$ is present. Alternatively, the microwave filter 23 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 19.

Figure 7 illustrates an example implementation of the quantum system 1 of figure 6, and more particularly a possible circuit to realize a three-wave mixing non-linear element.

The three-wave mixing non-linear element is formed by at least one loop 55 including a first Josephson junction 57, a central inductive element 59 and a second Josephson junction 61.

When a predetermined current of a constant intensity is applied by the current source 53, the resonant frequency $f_b$ is substantially equal to twice the resonant frequency $f_a$. The circuit shown in figure 8 is particularly configured to discriminate symmetrically the first mode a and the second mode b. The high symmetry of such a circuit achieves an improved quality of the 2-to-1 photon conversion.

The central inductive element 59 can be an inductance, a single Josephson junction or an array of Josephson junctions. The central inductive element 59 may thus be arranged between the first Josephson junction 57 and the second Josephson junction 61 as a loop in series. The arrangement in series may comprise a first inner node connecting a pole of the first Josephson junction 57 with a pole of the central inductive element 59. The arrangement in series may also comprise a second inner node connecting a pole of the second Josephson junction 61 with another pole of the central inductive element 59. The arrangement in series may also comprise a closed-loop node connecting another pole of the first Josephson junction 57 with another pole of the second Josephson junction 61.

The at least one loop 55 may be connected to a common ground via the closed-loop node. The circuit may also comprise a first capacitor 63 and a second capacitor 65. The first capacitor 63 may be connected in parallel with the first Josephson junction 57 between the common ground and the first inner node of the loop. The second capacitor 65 may be connected in parallel with the second Josephson junction 61 between the common ground and the second inner node of the loop.

The first Josephson junction 57 and the second Josephson junction 61 are substantially identical and the capacitive elements 63 and 65 are also substantially identical. Hence, the symmetry of the circuit implies that the first mode a is the symmetric superposition of the two resonators (as shown by the full arrows) and the second mode b is the anti-symmetric superposition of the two resonators (as shown by the dashed arrows). It can be noticed that only the second mode b has a contribution across the central inductive element 59 which is advantageously used to preferentially couple the external environment to this second mode b while isolating the first mode a from the external environment.

## D. Calibration method

A method for calibrating a quantum system for stabilizing a cat qubit will now be described.

### D.1. Cat qubit stabilization and the need for calibration

Stabilizing a cat qubit requires engineering a 2-to-1 photon exchange Hamiltonian with strength $g_2$. This Hamiltonian is either activated by a DC bias or a parametric pump. In the resonant stabilization case, the mode frequencies $\omega_a$ and $\omega_b$ are tuned thanks to the DC bias to get close to the frequency matching condition $2\omega_a \approx \omega_b$. In the parametric dissipative stabilization case, the pump frequency $\omega_p$ needs to be tuned to get close to the frequency matching condition $2\omega_a \approx \omega_b + \omega_p$. The two frequency matching conditions are identical when considering $\omega_p = 0$ in the DC bias case. In the second case, the strength of the 2-to-1 photon exchange rate $g_2$ is tunable and can be chosen by modifying the pump amplitude $\varepsilon_p$. Stabilizing a cat qubit also requires making the buffer mode dissipative and driving it with a microwave tone at frequency $\omega_d$ that is close to the resonant frequency of the buffer mode $\omega_b$.

Close to the frequency matching condition, both in the parametric and resonant case, the quantum system dynamics writes

$$H/\hbar = \frac{\Delta_p + \Delta_b}{2} a^\dagger a + \Delta_b b^\dagger b + g_2^* a^2 b^\dagger + g_2 a^{\dagger 2} b - \epsilon_d b^\dagger - \epsilon_d^* b$$

$$L_b = \sqrt{\kappa_b} b$$

Where a and b are the annihilation operators of the memory and buffer mode respectively and where $\Delta_p = 2\omega_a - \omega_b - \omega_p$ is the distance from the frequency matching condition and $\Delta_b = \omega_b - \omega_d$ the detuning between the buffer mode and the buffer drive, $g_2$ is the 2-to-1 photon exchange rate between the memory mode and the buffer, $\varepsilon_d$ the buffer drive amplitude, $L_b$ is the buffer mode jump operator and $\kappa_b$ is the buffer loss rate.

On top of these dynamics, typical spurious terms are present such as

$$H_{\mathrm{spur}} = K_a/2 \; a^{\dagger 2}a^2 + K_b/2 \; b^{\dagger 2}b^2 + \chi_{ab}a^{\dagger}ab^{\dagger}b$$

$$L_{\downarrow} = \sqrt{\kappa_a(1 + n_{th})}a$$

$$L_{\uparrow} = \sqrt{\kappa_a n_{th}}a^{\dagger}$$

$$L_{\varphi} = \sqrt{\kappa_{\varphi}}a^{\dagger}a$$

where $K_a$ and $K_b$ are memory or buffer self-Kerr respectively, $\chi_{ab}$ is the cross-Kerr between memory and buffer, $L_{\downarrow}$ is the one photon loss jump operator, $L_{\uparrow}$ is the one photon gain jump operator, $\kappa_a$ is the single photon loss of the memory, $n_{th}$ is the thermal occupancy of the memory, $L_{\varphi}$ is the phase jump operator and $\kappa_{\varphi}$ is the memory dephasing rate.

Calibrating a cat qubit system working point consists in determining the operating parameters ($\omega_p$, $\varepsilon_p$, $\omega_d$, $\varepsilon_d$) or ($I_{DC}$, $\omega_d$, $\varepsilon_d$) which are the parameters of the microwave tones that are sent on the quantum system to stabilize a cat qubit in the memory mode. Typically, $\omega_d$ is different from the design targeted $\omega_b$ and $\omega_p$ from $2\omega_a - \omega_b$ due to the finite precision of the design and simulation phase (which consists in finding the accurate circuit parameters and geometry), to the imperfections in the fabrication of the device and finally due to some of the spurious terms described above. For example, due to AC Stark shift, the resonant frequency of the mode will shift depending on whether the parametric pump in on or off.

D.2. Conventional calibration

As explained immediately above, conventional cat qubit calibration consists in determining the operating parameters such as $\omega_p$, $\varepsilon_p$, $\omega_d$, $\varepsilon_d$ which are the parameters of the microwave tones that are sent on the chip to stabilize a cat qubit in the memory.

In the article Lescanne *et al.* (2020), the procedure was as follows. Since the buffer mode is well coupled to its environment, its frequency $\omega_b$ can be readily found by spectroscopy on the coupled port. The memory mode is well isolated from its environment hence its frequency $\omega_a$ cannot be determined by spectroscopy. Instead the pump frequency $\omega_p$ is determined. When performing a spectroscopy of the buffer mode while the pump tone is on, a feature appears on the spectroscopy when pump frequency gets close to $2\omega_a - \omega_b$. Hence, the first mode frequency $\omega_a = (\omega_b + \omega_p)/2$ can be deduced by doing buffer spectroscopy while sweeping the pump tone frequency. These two measurements give a rough calibration of the buffer drive frequency $\omega_d (\approx \omega_b)$, pump frequency $\omega_p$ and memory drive frequency $\omega_z = (\omega_d + \omega_p)/2$ used for example for Z gates and as the frame rotation frequency for readout.

Equivalently, in the resonant case, a spectroscopy is first used to determine a buffer frequency. Then this spectroscopy is performed for various DC bias and the evolution of the buffer frequency with the DC bias is observed. When the buffer frequency becomes resonant with twice the memory frequency, a feature appears in the buffer spectroscopy which sets the DC bias, meaning that the frequency matching condition $2\omega_a = \omega_b$ is close. From this the buffer drive frequency $\omega_d \approx \omega_b$ at the frequency matching condition and memory drive frequency $\omega_z = \omega_d/2$ are deduced.

In both cases, this first rough calibration is not sufficient to calibrate the cat qubit system accurately enough. A second step is thus performed, which consists in measuring an observable of the memory state after applying a buffer drive and pump (or buffer drive and DC bias for the resonant case) for a duration long enough for the memory to converge to a cat state if the frequency are well chosen.

This measurement is repeated for various couples of buffer drive frequency and pump amplitude (or buffer drive frequency and DC bias value for the resonant case) until a couple which provides a satisfactory convergence to a cat state is determined.

In order to better explain the calibration method according to the invention and to emphasize the differences with the conventional method described in this paragraph, the time evolution of the system under the conventional calibration sequence will now be depicted in the simulation of figure 8.

In this figure, two curves plot the average photon number in the memory and magnitude of the buffer field as a function of time, starting from vacuum. The solid curve is plotted for a couple for which convergence to a cat state is reached, whereas the dashed curve is plotted for a couple for which convergence is not reached. The clear difference between the solid and dashed curve shows why this method of calibration is experimentally feasible.

On each curve, vertical lines have been drawn which correspond respectively to time instants at which Wigner representations shown below are taken. Hence, the two rows of Wigner representations (easting and northing axis being the field quadrature in squared root of the number of photons) each corresponds to snapshots taken at five different times indicated by vertical lines in the above described curves.

The first row corresponds to the memory state and the second to the buffer state. The Wigner rows clearly show how the memory state converges to a cat state.

In Lescanne *et al.* (2020), the memory observable was the parity and was measured via a neighboring transmon. This observable can also be the vacuum probability. By measuring these observables for various $\omega_d$ and $\omega_p$, a diamond-like feature can be found, the center of which is by definition $(\Delta_p, \Delta_d) = (0,0)$. Since the observable of the memory state was directly measured, the system is fully calibrated.

However, this method may require an ancilla transmon and does not have a high dynamic range: the diamond shape may not be precise enough to accurately determine the center and in the central region, the measured observable almost does not vary which makes it difficult to pinpoint the center. This is critical as the best working point may be offset from the exact geometric center of the diamond due to the spurious effects mentioned earlier.

Another measurement method that did not use the transmon was used in Berdou *et al.* 2023 (https://journals.aps.org/prxquantum/abstract/10.1103/PRXQuantum.4.020350). This method involved directly measuring the memory field using another port coupled to the memory. While this method renders the center of the diamond more unequivocal, it cannot be implemented in practical system since the coupled memory port reduces the quality factor of the memory and leads to a high phase-flip or decoherence rate.

### D.3. New calibration paradigm

The Applicant had a radically different idea for the fine-tuning of the parameters after the first "rough" calibration step.

Instead of going step by step towards cat qubit stabilization and tweaking the parameters, the Applicant chose to perform a measurement method which cannot and does not lead to stabilizing a cat qubit, yet provides meaningful information on the quantum system, thereby allowing to perform calibration.

Most importantly, this method does not necessitate the use of a transmon and is compatible with measurement done on the buffer only.

This is achieved by replacing the buffer drive by a drive on the memory mode at frequency $\omega_z$ close to the memory mode frequency mode $\omega_a$ and with amplitude $\varepsilon_z$. This changes the dynamics of the system as shown below:

$$ H/\hbar = \Delta_a a^\dagger a + (2\Delta_a - \Delta_p)b^\dagger b + g_2^* a^2 b^\dagger + g_2 a^{\dagger 2} b - \epsilon_z a^\dagger - \epsilon_z^* a $$

$$ L_b = \sqrt{\kappa_b}\, b $$

where $\Delta_p$ has the same definition as previously and $\Delta_a$ is the detuning of the memory drive $\Delta_a = \omega_a - \omega_z$.

It is important to note that the prefactor of the terms $a^\dagger a$ and $b^\dagger b$ are the same as in the previous Hamiltonian and was merely rewritten to better fit the new driving scheme. It is also important to note also that performing gates and readout of the cat qubit requires $\omega_z = \frac{\omega_d + \omega_p}{2}$ exactly (up to the precision of the microwave generators) such that, when $\omega_z$ (and $\omega_p$) is known, $\omega_d$ is known as well and vice versa.

Moreover, while this scheme does not stabilize a cat qubit, as shown in figure 9, it provides information which allow to perform the calibration. Indeed, optimizing $\Delta_p$ and $\Delta_a$ as a function of $\omega_p$ and $\omega_z$ will also provide $\omega_d = 2\omega_z - \omega_p$.

Just as before, in the resonant case, modifying the DC bias directly affects the resonant frequencies of the memory and buffer mode. Hence, $\Delta_p = 2\omega_a - \omega_b$ can be modified and tuned thanks to the DC bias to be brought close to 0, and $\Delta_a = \omega_a - \omega_z$ as well. Once $\omega_z$ is known, $\omega_d$ is simply $2\omega_z$.

Figure 9 is strictly identical to figure 8, except for the parameters used to produce it. Indeed, the only difference is that figure 9 is obtained while using a memory drive and a parametric pump (or memory drive and DC bias in the resonant case) - as explained above -, instead of a buffer drive and a parametric pump (or buffer drive and DC bias in the resonant case) for figure 8.

The first Wigner row of figure 9 shows that, even when the memory drive and the parametric pump (or memory drive and DC bias in the resonant case) are tuned in such a way that using these parameters would induce a cat state in the setup of figure 8, with the setup of figure 9, their convergence leads to a state different from a cat state in the memory. Again, the clear difference in between the solid and dashed curves of figure 9 is what makes the calibration experimentally feasible.

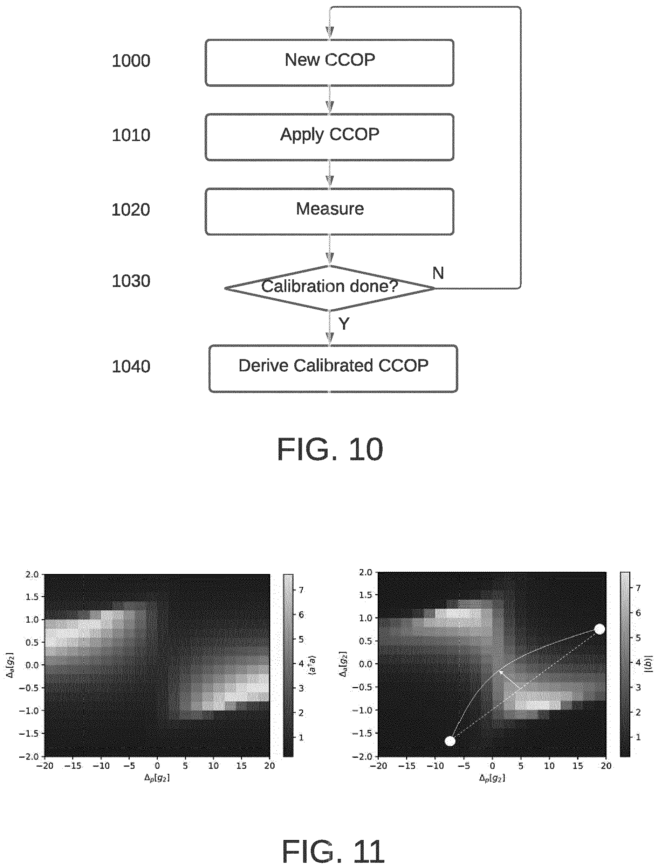

Figure 10 provides a generic diagram of a calibration method according to the invention.

In a first operation 1000, a new set of command circuit operating parameters (also referred to as "CCOP") are determined. As discussed above, the CCOP can be of only two kinds:

- a couple associating a memory drive frequency $\omega_z$ and a parametric pump frequency $\omega_p$, or

- a couple associating a memory drive frequency $\omega_z$ and a DC bias value.

By DC bias value, it should be understood any value which allows to define the DC bias whether as a current or a voltage.

After the CCOP are determined, they are applied to the command circuit 5 in an operation 1010, where a constant memory drive is applied together either the parametric pump or the DC bias, for a given duration. It should be noted that this does not mean that the DC bias is systematically turned off between various iterations: depending on the situation, the DC bias may be always on and merely modified. It is important that operation 1010 lasts sufficiently for the quantum system to showcase a measurable change. The Applicant has determined that a duration superior to 10 ns and less than 100 $\mu$s offers the best results. The lower bound (10 ns) comes from the time the dynamics take to start and is currently restricted by the state of the art for $g_2$ (currently up to a few MHz according to the current state of the art). Should $g_2$ be increased, the lower bound may be further decreased. The upper bound (100 $\mu$s) comes from the time it takes to converge to the steady state or the time it takes to acquire enough data and get a decent SNR in the case of an electromagnetic buffer field measurement. The upper bound can be unlimited, for instance in the case of continuous measurement of the buffer electromagnetic field.

Simultaneously with operation 1010, or immediately thereafter, a measurement is performed in an operation 1020. This measurement aims at providing data concerning the quantum circuit which will allow to perform the calibration.

Even though this driving sequence does not stabilize a cat qubit in the memory mode, it still provides useful information. The reason is that when $\Delta_a$ is optimized, there is a maximum number of photons in the memory, whereas when $\Delta_p$ is optimized the two-photon loss rate is maximized, decreasing the number of photons in the memory. This typically leads to a saddle point structure of the measurement and this behavior equivalently impacts the buffer field. As a result, by analyzing the memory photon number or buffer field measurements obtained for various couples of $\omega_p$ and $\omega_z$, it is possible to define which couple provides the best $\Delta_p$ and $\Delta_a$ compromise, as shown on figure 11.

The Applicant has discovered that one of both of a memory mode photon number measurement and a buffer mode electromagnetic field measurement are useful for performing the calibration. The memory mode photon number measurement may correspond to an average photon number measurement and usually takes place after operation 1010. If the device comprises no transmon, this is advantageously performed via longitudinal coupling between the buffer and the memory mode by parametrically pumping the 4-wave mixing element at the buffer frequency as described by the Applicant in European patent application EP23180476. The buffer mode electromagnetic field measurement may correspond to acquiring the signal coming out of the buffer via the coupler 21, or the signal arriving to the load 19. This generally takes place as the signal is generated continuously during the pulse sequence, converted from the memory drive. Hence in that case operation 1020 and 1010 occur simultaneously. Such a situation is advantageous as the measurement can be done in a single experiment, the length of operations 1020 and 1010 being increased such that the signal-to-noise ratio is appropriate. On the contrary, when the measurement 1020 is performed subsequently to operation 1010, the experiment must be repeated several times and all the outcome averaged such that the signal-to-noise ratio is appropriate.

As a result, it should be noted that operations 1010 and 1020 can partially or completely overlap, as the measurement can be performed as soon as the CCOP are applied, although of course no significant resulting measurement should be expected before about 10 ns from the application of the CCOP.

A test can then be performed in an operation 1030 to determine whether there are enough measurements to perform the calibration. Operation 1030 can be very simple or very complicated according to the method.

In a first embodiment, the method proposes performing a two-dimensional sweep of the CCOP. In this case, operation 1030 merely checks whether the two-dimensional sweep has been entirely performed and operation 1000 merely consists in picking the next couple of $\omega_p$ (or DC bias $I_{DC}$) and $\omega_z$ values in the two-dimensional sweep.

In a second embodiment, instead of a two-dimensional sweep of parameters, the method proposes using an optimizer that attempts to converge to the optimal couple given the previous measurements in order to speed up the calibration. There are several well-known saddle point search algorithms to efficiently converge to a saddle point.

One example consists in guessing (from the first rough calibration) two points which are across the saddle point (for example the white dots shown on figure 11). From there, several measurements can be performed along a linear path between the two points (the dashed line on figure 11). The measurement values along the path are analyzed and new points are probed near its maximum region. If these points have a lower value, the interpolating path gets updated. This process is repeated until the path reaches a path going through the saddle point where the maximum of the path cannot be minimized any further. The maximum of this final path is then the saddle point.

The optimizer hence consists of a minimization of maximum of the path, the new path being updated via gradient descent. Given the presence of noise in the measurement records, a threshold is set for the gradient descent which is on par with the measurement noise. This threshold is effectively a saddle point search algorithm convergence threshold. This noise could be reduced by averaging many times the same measurement. In this case, operation 1030 checks whether the gradient descent is still progressing. Furthermore, in this case, the CCOP determination of operation 1000 is the result of the gradient descent.

It will appear readily that many other types of optimizers can be used to determine the saddle point without parting from the scope of the invention.

If operation 1030 is negative, then operations 1000 to 1020 are repeated. Else, the calibration method has reached its end, and the calibrated CCOP may be determined in an operation 340.

In the example of the first embodiment described above, if the number of photons in the memory is measured, it is necessary to determine within the measurement 2D map which couple of $\omega_p$ and $\omega_z$ values correspond to the saddle point optimizing $\Delta_p$ and $\Delta_a$. The same will apply if the measurements are performed to retrieve the electromagnetic field amplitude in the buffer mode.

In the example of the second embodiment described above, due to the nature of the gradient descent, operation 1040 will simply consist in retrieving the last CCOP of operation 1000.

While the above embodiments have been described with respect to the parametric dissipative stabilization, the situation is similar in the case of the resonant stabilization, except that instead of $\omega_p$, it is the DC bias value which is tested.

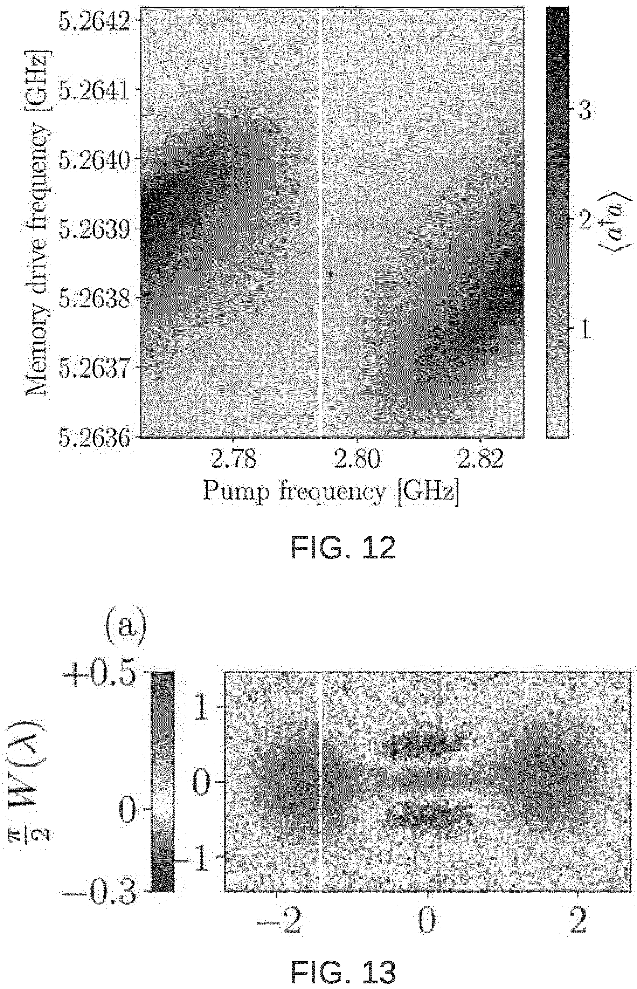

Finally, figure 12 represents data from a recent experiment. The quantum device comprised a parametrically pumped ATS and the measurement performed was a memory average photon number measurement via longitudinal coupling to the buffer mode. The saddle point was recovered according to the above described method using a two-dimensional sweep, and leads to the Wigner shown on figure 13, which evidences that the calibration methods provides for a cat state stabilization in the memory mode.

## Claims

1. Method for calibrating a quantum system for stabilizing a cat qubit,

   said quantum system (1) including a non-linear superconducting quantum circuit (3) having a first mode (a) with a first resonant frequency $\omega_a$ for hosting said cat qubit and a second mode (b) with a second resonant frequency $\omega_b$ and comprising a non-linear element (7) arranged to induce a 2-to-1 photon exchange between said first mode (a) and said second mode (b) either via a parametric pump and 4-wave mixing coupling said first mode (a) and said second mode (b) or via a DC bias and 3-wave mixing coupling said first mode (a) and said second mode (b), and a command circuit (5) for: (i) delivering microwave radiation to the non-linear superconducting quantum circuit (3) in order to provide said parametric pump or current bias to the non-linear superconducting quantum circuit (3) in order to provide said DC bias, and (ii) delivering microwave radiation to the non-linear superconducting quantum circuit (3) in order to provide a drive of said first mode,
   said method comprising the following operations:

   a) obtaining a set of command circuit operating parameters, each set consisting of either a couple associating a frequency $\omega_p$ of said parametric pump and a frequency $\omega_z$ of said first mode drive if said non-linear element (7) performs a 4-wave mixing or a couple associating a value $I_{DC}$ of said DC bias and a frequency $\omega_z$ of said first mode drive if said non-linear element (7) performs a 3-wave mixing,
   b) applying said set of command circuit operating parameters to said command circuit (5) during a period of more than 10 ns,
   c) performing at least one measurement in the group comprising a first mode photon number measurement and a second mode electromagnetic field measurement,
   d) repeating operations a) to c) until a calibration condition has been met,
   e) deriving a calibrated set of command circuit operating parameters based on the measurements obtained in operation c).

2. Method according to claim 1, in which the repetition of operation a) in operation d) includes performing a two-dimensional sweep of operating values for said parametric pump frequency $\omega_p$ and said first mode drive frequency $\omega_z$ or for said DC bias value $I_{DC}$ and said first mode drive frequency $\omega_z$.

3. Method according to claim 2, in which the calibration condition of operation d) is met when the two-dimensional sweep has been performed.

4. Method according to one of the preceding claims, in which operation e) comprises determining a saddle point in the measurements of operation c).

5. Method according to claim 1, in which the repetition of operation a) in operation d) includes performing a saddle point search algorithm on said parametric pump frequency $\omega_p$ and said first mode drive frequency $\omega_z$ or on said DC bias value $I_{DC}$ and said first mode drive frequency $\omega_z$ based on the measurements of operation c).

6. Method according to claim 5, in which the calibration condition of operation d) is met when the saddle point search algorithm converges beyond a chosen threshold.

7. Method according to claim 5 or 6, in which operation e) comprises returning the set of command circuit operating parameters of the last repetition of step a).

8. Method according to one of the preceding claims, in which operation b) and operation c) overlap.

9. Method according to one of the preceding claims, in which operation c) comprises acquiring the signal coming out of said second mode (b).

10. A quantum system (1) for stabilizing a cat qubit, said quantum system (1) including a non-linear superconducting quantum circuit (3) having a first mode (a) with a first resonant frequency $\omega_a$ for hosting said cat qubit and a second mode (b) with a second resonant frequency $\omega_b$ and comprising a non-linear element (7) arranged to induce a 2-to-1 photon exchange between said first mode (a) and said second mode (b) either via a parametric pump and 4-wave mixing coupling said first mode (a) and said second mode (b) or via a DC bias and 3-wave mixing coupling said first mode (a) and said second mode (b), and a command circuit (5) for: (i) delivering microwave radiation or current bias to the non-linear superconducting quantum circuit (3) in order to provide said parametric pump or current bias to the non-linear superconducting quantum circuit (3) in order to provide said DC bias, and (ii) delivering microwave radiation to the non-linear superconducting quantum circuit (3) in order to provide a drive of said first mode, wherein said command circuit is configured to perform the method according to one of the preceding claims.

**Patentansprüche**

1. Verfahren zur Kalibrierung eines Quantensystems zur Stabilisierung eines Katzen-Qubits,

wobei das Quantensystem (1) einen nichtlinearen supraleitenden Quantenschaltkreis (3) einschließt, der einen ersten Modus (a) mit einer ersten Resonanzfrequenz $\omega_a$ zum Aufnehmen des Katzen-Qubits und einem zweiten Modus (b) mit einer zweiten Resonanzfrequenz $\omega_b$ aufweist und ein nichtlineares Element (7) umfasst, das so angeordnet ist, dass es einen 2-zu-1-Photonenaustausch zwischen dem ersten Modus (a) und dem zweiten Modus (b) entweder durch eine parametrische Pumpe und 4-Wellen-Mischungskopplung zwischen dem ersten Modus (a) und dem zweiten Modus (b) oder durch eine DC-Vorspannung und 3-Wellen-Mischungskopplung zwischen dem ersten Modus (a) und dem zweiten Modus (b) induziert, und einen Befehlsschaltkreis (5) zum: (i) Abgeben von Mikrowellenstrahlung an den nichtlinearen supraleitenden Quantenschaltkreis (3), um die parametrische Pumpe oder die Stromvorspannung an den nichtlinearen supraleitenden Quantenschaltkreis (3) bereitzustellen, um die Gleichstromvorspannung bereitzustellen, und (ii) Abgeben von Mikrowellenstrahlung an den nichtlinearen supraleitenden Quantenschaltkreis (3), um einen Antrieb des ersten Modus bereitzustellen, wobei das Verfahren die folgenden Operationen umfasst:

a) Erhalten eines Satzes von Befehlsschaltkreis-Parametern, wobei jeder Satz entweder aus einem Paar besteht, das eine Frequenz $\omega_p$ der parametrischen Pumpe und eine Frequenz $\omega_z$ des ersten Modus-Antriebssignals zuordnet, wenn das nichtlineare Element (7) eine 4-Wellen-Mischung durchführt, oder aus einem Paar, das einen Wert $I_{DC}$ der DC-Vorspannung und eine Frequenz $\omega_z$ des ersten Modus-Antriebssignals zuordnet, wenn das nichtlineare Element (7) eine 3-Wellen-Mischung durchführt,
b) Anwenden des Satzes von Befehlsschaltkreis-Betriebsparametern auf den Befehlsschaltkreis (5) während eines Zeitraums von mehr als 10 ns,
c) Durchführen von mindestens einer Messung in der Gruppe, die eine Photonenzahlmessung im ersten Modus und eine elektromagnetische Feldmessung im zweiten Modus umfasst,

d) Wiederholen der Operationen a) bis c), bis eine Kalibrierungsbedingung erfüllt ist,

e) Ableiten eines kalibrierten Satzes von Befehlsschaltkreis-Betriebsparametern basierend auf den im Betrieb c) erhaltenen Messungen.

**2.** Verfahren nach Anspruch 1, bei dem die Wiederholung von Operation a) in Operation d) Durchführen eines zweidimensionalen Sweeps von Betriebswerten für die parametrische Pumpenfrequenz $\omega_p$ und die Antriebsfrequenz im ersten Modus $\omega_z$ oder für den DC-Vorspannungswert $I_{DC}$ und die Antriebsfrequenz $\omega_z$ im ersten Modus umfasst.

**3.** Verfahren nach Anspruch 2, bei dem die Kalibrierbedingung von Operation d) erfüllt ist, wenn der zweidimensionale Sweep durchgeführt wurde.

**4.** Verfahren nach einem der vorstehenden Ansprüche, wobei die Operation e) Bestimmen eines Sattelpunkts in den Messungen von Operation c) umfasst.

**5.** Verfahren nach Anspruch 1, bei dem die Wiederholung von Operation a) in Operation d) Durchführen eines Sattelpunktsuchalgorithmus auf der parametrischen Pumpfrequenz $\omega_p$ und der Antriebsfrequenz im ersten Modus $\omega_z$ oder auf dem DC-Vorspannungswert $I_{DC}$ und der Antriebsfrequenz im ersten Modus $\omega_z$ basierend auf den Messungen von Operation c) umfasst.

**6.** Verfahren nach Anspruch 5, bei dem die Kalibrierungsbedingung von Operation d) erfüllt ist, wenn der Sattelpunktsuchalgorithmus über einen gewählten Schwellenwert hinaus konvergiert.

**7.** Verfahren nach Anspruch 5 oder 6, wobei Operation e) Zurückgeben des Satzes von Befehlsschaltkreis-Betriebsparametern der letzten Wiederholung von Schritt a) umfasst.

**8.** Verfahren nach einem der vorstehenden Ansprüche, bei dem sich die Operation b) und c) überschneiden.

**9.** Verfahren nach einem der vorstehenden Ansprüche, bei dem Operation c) Erfassen des aus dem zweiten Modus (b) kommenden Signals umfasst.

**10.** Quantensystem (1) zur Stabilisierung eines Katzen-Qubits, wobei das Quantensystem (1) einen nichtlinearen supraleitenden Quantenschaltkreis (3) einschließt, der einen ersten Modus (a) mit einer ersten Resonanzfrequenz $\omega_a$ zum Aufnehmen des Katzen-Qubits und einem zweiten Modus (b) mit einer zweiten Resonanzfrequenz $\omega_b$ aufweist und ein nichtlineares Element (7) umfasst, das so angeordnet ist, dass es einen 2-zu-1-Photonenaustausch zwischen dem ersten Modus (a) und dem zweiten Modus (b) entweder durch eine parametrische Pumpe und 4-Wellen-Mischungskopplung zwischen dem ersten Modus (a) und dem zweiten Modus (b) oder durch eine DC-Vorspannung und 3-Wellen-Mischungskopplung zwischen dem ersten Modus (a) und dem zweiten Modus (b) induziert, und eine Befehlsschaltkreis (5) zum: (i) Abgeben von Mikrowellenstrahlung oder Stromvorspannung an den nichtlinearen supraleitenden Quantenschaltkreis (3), um die parametrische Pumpe oder die Stromvorspannung an den nichtlinearen supraleitenden Quantenschaltkreis (3) bereitzustellen, um die DC-Vorspannung bereitzustellen, und (ii) Abgeben von Mikrowellenstrahlung an den nichtlinearen supraleitenden Quantenschaltkreis (3), um einen Antrieb des ersten Modus bereitzustellen, wobei die Befehlsschaltkreis so konfiguriert ist, dass sie das Verfahren nach einem der vorstehenden Ansprüche durchführt.

**Revendications**

**1.** Procédé de calibrage d'un système quantique pour stabiliser un qubit de chat,

ledit système quantique (1) incluant un circuit quantique supraconducteur non linéaire (3) présentant un premier mode (a) avec une première fréquence de résonance $\omega_a$ pour héberger ledit qubit de chat et un second mode (b) avec une seconde fréquence de résonance $\omega_b$ et comprenant un élément non linéaire (7) agencé pour induire un échange de photons de 2 à 1 entre ledit premier mode (a) et ledit second mode (b), soit via une pompe paramétrique et un mixage à 4 ondes couplant ledit premier mode (a) et ledit second mode (b), soit via une polarisation CC et un mixage à 3 ondes couplant ledit premier mode (a) et ledit second mode (b), et un circuit de commande (5) pour : (i) délivrer un rayonnement micro-ondes au circuit quantique supraconducteur non linéaire (3) afin de fournir ladite pompe paramétrique, ou une polarisation de courant au circuit quantique supraconducteur non linéaire (3) afin de fournir ladite polarisation CC, et (ii) délivrer un rayonnement micro-ondes au circuit quantique supraconducteur non linéaire (3) afin de fournir un entraînement dudit premier mode.

ledit procédé comprenant les opérations suivantes :

    a) l'obtention d'un ensemble de paramètres de fonctionnement de circuit de commande, chaque ensemble étant constitué soit d'un couple associant une fréquence $\omega_p$ de ladite pompe paramétrique et une fréquence $\omega_z$ dudit entraînement de premier mode si ledit élément non linéaire (7) effectue un mixage à 4 ondes, soit d'un couple associant une valeur $I_{DC}$ de ladite polarisation CC et une fréquence $\omega_z$ dudit entraînement de premier mode si ledit élément non linéaire (7) effectue un mixage à 3 ondes,

    b) l'application dudit ensemble de paramètres de fonctionnement de circuit de commande audit circuit de commande (5) pendant une période supérieure à 10 ns,

    c) la réalisation d'au moins une mesure dans le groupe comprenant une mesure de nombre de photons de premier mode et une mesure de champ électromagnétique de second mode,

    d) la répétition des opérations a) à c) jusqu'à ce qu'une condition de calibrage soit remplie,

    e) la déduction d'un ensemble calibré de paramètres de fonctionnement de circuit de commande sur la base des mesures obtenues lors de l'opération c).

2. Procédé selon la revendication 1, dans lequel la répétition de l'opération a) dans l'opération d) inclut une exécution d'un balayage bidimensionnel de valeurs de fonctionnement pour ladite fréquence de pompe paramétrique $\omega_p$ et ladite fréquence d'entraînement de premier mode $\omega_z$ ou pour ladite valeur de polarisation CC $I_{DC}$ et ladite fréquence d'entraînement de premier mode $\omega_z$.

3. Procédé selon la revendication 2, dans lequel la condition de calibrage de l'opération d) est satisfaite lorsque le balayage bidimensionnel a été effectué.

4. Procédé selon l'une des revendications précédentes, dans lequel l'opération e) comprend une détermination d'un point selle dans les mesures de l'opération c).

5. Procédé selon la revendication 1, dans lequel la répétition de l'opération a) dans l'opération d) inclut une exécution d'un algorithme de recherche de point selle sur ladite fréquence de pompe paramétrique $\omega_p$ et ladite fréquence d'entraînement de premier mode $\omega_z$ ou sur ladite valeur de polarisation CC $I_{DC}$ et ladite fréquence d'entraînement de premier mode $\omega_z$ sur la base des mesures de l'opération c).

6. Procédé selon la revendication 5, dans lequel la condition de calibrage de l'opération d) est satisfaite lorsque l'algorithme de recherche de point selle converge au-delà d'un seuil choisi.

7. Procédé selon la revendication 5 ou 6, dans lequel l'opération e) comprend un retour de l'ensemble de paramètres de fonctionnement de circuit de commande de la dernière répétition de l'étape a).

8. Procédé selon l'une des revendications précédentes, dans lequel l'opération b) et l'opération c) se chevauchent.

9. Procédé selon l'une des revendications précédentes, dans lequel l'opération c) comprend une acquisition du signal provenant dudit second mode (b).

10. Système quantique (1) pour stabiliser un qubit de chat, ledit système quantique (1) incluant un circuit quantique supraconducteur non linéaire (3) présentant un premier mode (a) avec une première fréquence de résonance $\omega_a$ pour héberger ledit qubit de type chat et un second mode (b) avec une seconde fréquence de résonance $\omega_b$ et comprenant un élément non linéaire (7) agencé pour induire un échange de photons de 2 à 1 entre ledit premier mode (a) et ledit second mode (b), soit via une pompe paramétrique et un mixage à 4 ondes couplant ledit premier mode (a) et ledit second mode (b), soit via une polarisation CC et un mixage à 3 ondes couplant ledit premier mode (a) et ledit second mode (b), et un circuit de commande (5) pour : (i) délivrer un rayonnement micro-ondes ou une polarisation de courant au circuit quantique supraconducteur non linéaire (3) afin de fournir ladite pompe paramétrique, ou une polarisation de courant au circuit quantique supraconducteur non linéaire (3) afin de fournir ladite polarisation CC, et (ii) délivrer un rayonnement micro-onde au circuit quantique supraconducteur non linéaire (3) afin de fournir un entraînement dudit premier mode, dans lequel ledit circuit de commande est configuré pour exécuter le procédé selon l'une des revendications précédentes.

FIG. 1

FIG. 2

FIG. 3

FIG. 4

FIG. 5

FIG. 6

FIG. 7

FIG. 8

FIG. 9

1000 New CCOP

1010 Apply CCOP

1020 Measure

1030 Calibration done? N

Y

1040 Derive Calibrated CCOP

FIG. 10

FIG. 11

FIG. 12

FIG. 13

**EP 4 492 296 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23175147 A
- EP 21306965
- EP 23180476 A

**Non-patent literature cited in the description**

- **R. LESCANNE et al.** Exponential suppression of bit-flips in a qubit encoded in an oscillator. *Nature Physics*, 2020
- **Z. LEGHTAS et al.** Confining the state of light to a quantum manifold by engineered two-photon loss. *Science*, 2015, vol. 347 (6224)
- **S. TOUZARD et al.** Coherent Oscillations inside a Quantum Manifold Stabilized by Dissipation. *Physical Review*, 2018, vol. X 8, 023005